# EUROPEAN PATENT SPECIFICATION

(11) **EP 3 687 307 B1**
(45) Date of publication and mention of the grant of the patent: **01.09.2021**
(21) Application number: 17794098.8
(22) Date of filing: 28.09.2017
(51) Int. Cl.: A23D 7/005, A23L 2/38

(54) **NUTRITIONAL DRINK COMPRISING VIRGIN OLIVE OIL**
NATIVES OLIVENÖL ENTHALTENDES NAHRHAFTES GETRÄNK
BOISSON NUTRITIVE COMPRENANT DE L'HUILE D'OLIVE VIERGE

(43) Date of publication of application: 05.08.2020
(73) Proprietor: JPN Business Development B.V., 2513 BK The Hague (NL)
(72) Inventor: PETERZON, James Gilbert, 1231 NG Loosdrecht (NL); STIJNMAN, Ann Catherine, 1322 AJ Almere (NL)
(74) Representative: Nederlandsch Octrooibureau
(86) International application number: PCT/NL2017/050648
(87) International publication number: WO 2019/066645

(56) References cited:
- WO-A1-2018/024823
- WO-A2-2009/013596
- JP-B1- 6 205 539

## Description

### TECHNICAL FIELD OF THE INVENTION

The present invention relates to a nutritional drink comprising virgin olive oil. More particularly, the invention relates to a nutritional drink in the form of a liquid oil-in-water emulsion containing at least 25 wt.% virgin olive oil. This nutritional drink provides the nutritional benefits of virgin olive oil, can easily be consumed and even appeals to consumers who do not like the distinctive taste of virgin olive oil.

Thus, the nutritional drink of the present invention is an ideal vehicle for introducing virgin olive oil into the diet of consumers who do not normally consume significant quantities of this healthy oil.

### BACKGROUND OF THE INVENTION

Virgin olive oils are the oils obtained from the fruit of the olive tree solely by mechanical or other physical means under conditions, particularly thermal conditions, that do not lead to alterations in the oil, and which have not undergone any treatment other than washing, decanting, centrifuging and filtration. Virgin olive oils can be consumed directly without any further refining treatment.

Virgin olive oils have a characteristic taste. Positive flavour descriptors that are used to describe the taste of virgin olive oils include "bitter", "pungent", "fruity", "green", "floral" etc. The taste of virgin olive oils is highly appreciated by consumers in the Mediterranean region as is evident from the fact that *per capita* consumption of virgin olive oil in Southern European countries (Greece, Italy and Spain) is very high (up to 10 litres or more).

Numerous studies have shown that olive oil is one of the most important ingredients of "Mediterranean diet" associated with a reduction in cardiovascular disease and certain types of cancerous diseases.

Buckland et al. ("Olive oil intake and mortality within the Spanish population (EPIC-Spain)".Am J Clin Nutr, (2012). 96(1):142-9) evaluated the association between olive oil and overall and cause-specific mortality in the Spanish population in the European Prospective Investigation into Cancer and Nutrition (EPIC-Spain). A total of 40,622 participants (62% female) aged 29-69 y were recruited from 5 Spanish regions in 1992-1996. The association between olive oil (analyzed as a categorical and continuous variable) and overall and cause-specific mortality (CVD, cancer, and other causes) was analyzed by using Cox proportional hazards regression models adjusted for potential confounders. A total of 1915 deaths were reported during 13.4 y of follow-up: 416 CVD deaths, 956 cancer deaths, and 417 deaths from other causes (for 126 deaths the cause was not available). In comparison with nonconsumers, the highest quartile of olive oil consumption was associated with a 26% (95% CI: 13%, 36%) reduction in risk of overall mortality and a 44% (95% CI: 21%, 60%) reduction in CVD mortality. For each increase in olive oil of 10 g · 2000 kcal⁻¹ · d⁻¹, there was a 7% (95% CI: 3%, 10%) decreased risk of overall mortality and a 13% (95% CI: 6%, 20%) decreased risk of CVD mortality. No significant association was observed between olive oil and cancer mortality.

Experimental-based evidence has accumulated on the health benefits of minor bioactive components of olive oil such as polyphenols which have specific structures and are found in high quantities in virgin olive oil. Besides polyphenols, virgin olive oil also contains a variety of other components that contribute to its dietary benefits, e.g. monounsaturated fatty acids (mainly oleic, 55-83 %), sterols (mainly β-sitosterol), tocopherols and carotenoids.

The European Food Safety Authority (EFSA) has issued a Scientific Opinion (EFSA Journal 2011;9(4):2033) that addresses the scientific substantiation of a variety of health claims in relation to polyphenols in olive. The Panel considers that the following wording reflects the scientific evidence: "Consumption of olive oil polyphenols contributes to the protection of blood lipids from oxidative damage." According to the panel: *In order to bear the claim, 5 mg of hydroxytyrosol and its derivatives (e.g. oleuropein complex and tyrosol) in olive oil should be consumed daily.* The Panel considers that polyphenols (e.g. hydroxytyrosol and oleuropein complex) in olive (olive fruit, olive mill waste waters or olive oil, *Olea europaea* L. extract and leaf) can be characterised by their content of hydroxytyrosol and its derivatives (e.g. oleuropein complex).

Polyphenols comprise a very wide group (several thousands of compounds) of plant secondary metabolites including flavonoids, isoflavonoids, phenolic acids, proanthocyanidins and other tannins, and lignans with different biological activities. The major polyphenols in olive oil are phenolic acids (e.g. hydroxytyrosol and tyrosol), secoiridoids (e.g. oleuropein) and lignans (e.g. pinoresinol). In nature, hydroxytyrosol is found in olives in the form of its elenolic acid ester, oleuropein. These polyphenolic compounds can be measured in foods by established methods.

Despite the high nutritional value of virgin olive oil, consumption of virgin olive oil outside the Mediterranean region remains relatively low. This can partly be explained by the fact that in non-Mediterranean cuisine virgin olive oil is hardly used as a cooking oil or salad oil. Another important factor is the characteristic taste of virgin olive oil, which is disliked by many people who are not acquainted with the Mediterranean cuisine. Especially the bitterness and pungency associated with the presence of the nutritionally valuably polyphenols is often disliked.

The prior art describes the application of virgin olive oil in a range of edible products.

US 2004/0081740 relates to a mayonnaise containing extra virgin olive oil as its main oily ingredient. The mayonnaise typically contains 40-80 wt.% extra virgin olive oil; 20-40 wt.% olive oil; 10-20 wt.% egg yolk; 2-5 wt.% vinegar; 0.5-2 wt.% lemon juice and 0.5-1.5 wt.% salt.

WO 2010/076318 relates to an olive oil spread. Example 1 describes spreads containing 75-85 wt.% virgin olive oil, 12.5-22.3 wt.% water and 2.5-3 wt.% sucrose ester.

US 2013/0045193 relates to compositions for the prevention of cardiovascular disease. Example 1 describes a composition in soft gel form, containing extra virgin olive oil, lecithin, vitamins, fish oil, minerals and amino acids.

US 2015/0086695 relates to a beverage product comprising water and a sweetener composition, wherein the sweetener composition includes at least one high potency sweetener, at least one oil, and optionally, at least one hydrocolloidal material. Example 2 describes a beverage containing 1 wt.% extra virgin olive oil.

WO 2017/06473 describes a solid creamy alimentary formulation comprising 50-90 wt.% olive oil, 5-50 wt.% water, 0.2-1.2 wt.% emulsifying agents, 0.2-1.5 wt.% vegetable fibres and 0.01-0.15 wt.% organic acid. Example 12 describes the manufacture of puff pastry fat paste by blending cocoa butter, extra virgin olive oil, water, soybean lecithin and cyclodextrin.

Nikovska ("Study of olive oil-in-water emulsions with protein emulsifiers", Emir. J. Food Agric. 2012. 24 (1): 17-24) report the outcome of a study in which the rheological properties and oxidative stability of oil-in-water emulsions (O/W) with virgin olive oil stabilized by soy protein isolate (SI) and whey protein isolate (WPI) were investigated. The emulsions were prepared at oil phase volume concentrations ranging from 30 to 70% v/v and emulsifier concentrations ranging from 4 to 8 wt%. The emulsions exhibited Newtonian or pseudoplastic behaviour at lower oil and emulsifier concentrations and plastic behaviour at higher concentrations.

JP 6 205539 discloses an olive oil drink in the form of a liquid oil-in-water emulsion comprising about 3,5 wt.% extra virgin olive oil, about 96 wt.% water, about 0,4 wt.% by weight of water of a sweetening agent such as honey and maple syrup and about 0,1 wt.% xanthan gum.

### SUMMARY OF THE INVENTION

The present inventors have developed a nutritional drink that provides the nutritional benefits of virgin olive oil, that can easily be consumed and that even appeals to consumers who do not like the distinctive taste of virgin olive oil. The nutritional drink of the present invention is a liquid oil-in-water emulsion that comprises:
- 25-70 wt.% virgin olive oil;
- 25-70 wt.% of water;
- 1-15% by weight of water of a sweetening agent selected from saccharide sweeteners, polyol sweeteners and combinations thereof;
- 0.5-8 wt.% of an emulsifying agent selected from protein emulsifiers, phospholipids and combinations thereof; and
- flavouring.

The inventors have unexpectedly discovered that the typical flavour of virgin olive oil is suppressed if the oil is applied in an oil-in-water emulsion that contains a sweetened aqueous phase and flavouring. Although the inventors do not wish to be bound by theory, it is believed that inside the mouth volatile flavour substances that contribute to the characteristic flavour of virgin olive oil are released more slowly from the oil-in-water emulsion than from the virgin olive oil *per se.* Due to this decelerated release, the flavour impact of these flavour substances is suppressed. It is further believed that the presence of the saccharide and/or polyol sweetener in the aqueous phase helps to reduce the release rate of the aforementioned volatile flavour substances and/or masks the bitter and pungent flavour attributes of virgin olive oil. Finally, the added flavouring ensures that the flavour contribution of the virgin olive oil is no longer recognisable and provides a flavour that is appreciated by the average consumer.

The nutritional drink of the present invention has a very pleasant, creamy mouthfeel and does not leave an oily film in the mouth after consumption.

Thus, the nutritional drink of the present invention is an ideal vehicle for introducing virgin olive oil into the diet of consumers who do not normally consume significant quantities of this healthy oil.

The nutritional drink of the present invention is typically provided in a container that holds an amount of the nutritional drink that is equal to the amount that should be consumed on a daily basis to provide a meaningful nutritional benefit. Typically, this daily amount is in the range of 30-150 ml.

### DETAILED DESCRIPTION OF THE INVENTION

Accordingly, a first aspect of the invention relates to a nutritional drink in the form of a liquid oil-in-water emulsion, said emulsion comprising:
- 25-70 wt.% virgin olive oil;
- 25-70 wt.% of water;
- 1-15% by weight of water of a sweetening agent selected from saccharide sweeteners, polyol sweeteners and combinations thereof;
- 0.5-8 wt.% of an emulsifying agent selected from protein emulsifiers, phospholipids and combinations thereof; and
- flavouring.

The term "virgin olive oil" as used herein, unless indicated otherwise, refers to oil that is fit for human consumption and that is obtained from olives solely by mechanical or other physical means, and which have not undergone any treatment other than washing, decanting, centrifuging and filtration. Virgin olive oil has a free acidity, expressed as oleic acid, of not more than 2 grams per 100 grams (0.2%). The term "virgin olive oil" encompasses "extra virgin olive oil".

The term "extra virgin olive oil" as used herein refers to a virgin olive oil having a free acidity, expressed as oleic acid, of not more than 0.8 grams per 100 gram (0.8%).

The term "protein emulsifiers" as used herein refers to amphiphilic proteins that are capable of stabilising oil-in-water emulsions.

The term "phospholipid" as used herein refers to glycerides (acylglycerols) comprising a phosphate group and one or two fatty acid residues. Examples of phospholipids include phosphatidyl choline, phosphatidyl ethanolamine, phosphatidyl inositol, phosphatidyl serine and phosphatic acid.

Besides virgin olive oil, the emulsion may contain one or more other vegetable oils. These other vegetable oils may be refined or unrefined. Preferably, the one or more other vegetable oils are refined vegetable oil(s).

Preferably, at least 50 wt.% of the vegetable oil contained in the emulsion is virgin olive oil. Even more preferably virgin olive oil constitutes at least 70 wt.%, more preferably at least 90 wt.% and most preferably at least 98 wt.% of the vegetable oil that is contained in the emulsion.

The emulsion may contain up to 10 wt.% of non-vegetable oil, e.g. fish oil, algal oil or combinations thereof. Preferably, the emulsion does not contain non-vegetable oil.

The virgin olive oil that is employed in accordance with the present invention preferably contains at least 50 wt.%, more preferably at least 80 wt.% extra virgin olive oil. Most preferably, the virgin olive oil is extra virgin olive oil.

The virgin olive oil that is applied in the nutritional drink preferably originates from a cultivar that yields a relatively bland tasting olive. According to a particularly preferred embodiment, the virgin olive oil originates from an olive cultivar selected from Nera di Gonnos, Tonda di Cagliari, Pizz'e Carroga and combinations thereof.

The continuous aqueous phase of the emulsion preferably has a pH in the range of 2.5 to 8.5 More preferably, the emulsion has a pH in the range of 3.0 to 8.0.

In case the nutritional drink employs a protein emulsifier, the continuous aqueous phase preferably has a pH that is significantly higher or lower than the iso-electric point of the protein emulsifier. In case of whey protein, the continuous aqueous phase has a pH in the range of 5.5-8.0 or in the range of 3.0-5.0, even more preferably said pH is in the range of 5.8 to 7.8.

The sweetening agent is preferably contained in the emulsion in a concentration of at least 2%, more preferably at least 2.5% and most preferably 3-12% by weight of water.

Preferably, the emulsion contains at least 2%, more preferably at least 2.5% and most preferably 3-12% of the saccharide sweetener by weight of water. Examples of saccharide sweeteners that can be applied in the nutritional drink include sucrose, glucose, fructose, galactose, maltose, xylose, lactose and combinations thereof.

The emulsion preferably contains at least 1% by weight of water, more preferably at least 2% by weight of water and most preferably at least 3% by weight of water of saccharide sweetener selected from sucrose, glucose, fructose and combinations thereof.

According to a particularly preferred embodiment, the emulsion contains at least 1% by weight of water, more preferably at least 1.5% by weight of water and most preferably at least 2% by weight of water of monosaccharide sweetener selected from glucose, fructose and combinations thereof.

The saccharide sweetener may suitably be introduced in the nutritional drink in the form of a natural ingredient that contains a high level of saccharide sweetener. Examples of such natural sweetener ingredients include agave syrup, corn syrup, maple syrup, honey, palm sugar, date sugar and combinations thereof.

Examples of polyol sweeteners that may be applied in the nutritional drink include sorbitol, mannitol, maltitol, erythritol, xylitol, isomalt, lactitol and combinations thereof. Preferably, the emulsion contains not more than 5% polyol sweetener by weight of water. More preferably, the emulsion contains not more than 2% polyol sweetener by weight of water. Even more preferably, the emulsion contains not more than 0.5% polyol sweetener by weight of water.

The emulsifying agent is preferably contained in the emulsion in a concentration of 0.8-7 wt.%, more preferably of 1-6 wt.%.

The nutritional drink preferably contains an emulsifying agent in the form of a protein emulsifier. According to a particularly preferred embodiment, the protein emulsifier is contained in the oil-in-water emulsion in a concentration of at least 1.2 wt.%, more preferably of at least 1.4 wt.%.

The protein emulsifier that is employed in accordance with the present invention is preferably selected from milk protein, legume protein, egg protein and combinations thereof.

The milk protein is preferably selected from whey protein, casein, caseinate and combinations thereof. Most preferably the milk protein is whey protein.

The legume protein is preferably selected from pea protein, bean protein, lentil protein, chickpea protein, soybean protein and combinations thereof. Most preferably, the legume protein is pea protein.

In a particularly preferred embodiment, the protein emulsifier is selected from whey protein, pea protein and combinations thereof. Most preferably, the protein emulsifier is whey protein.

The flavouring that is applied in the nutritional drink should mask recognisable olive oil flavour notes and be compatible with the olive oil flavour notes that remain detectable in the drink. According to a particularly preferred embodiment, the flavour provided by the flavouring is selected from fruit flavour, vanilla flavour, chocolate flavour, coffee flavour, honey flavour, herb flavour, spice flavour and combinations thereof. Most preferably, the flavour provided by the flavouring is selected from fruit flavour, vanilla flavour, chocolate flavour, coffee flavour and combinations thereof

The oil-in-water emulsion of the present invention preferably contains 35-70 wt.% vegetable oil (including virgin olive oil) and 27-60 wt.% water. More preferably, the emulsion contains 40-65 wt.% vegetable oil and 32-55 wt.% water.

The combination of vegetable oil and water typically constitutes at least 80 wt.% of the emulsion. More preferably, the combination of vegetable oil and water constitutes at least 85 wt.%, most preferably at least 90 wt.% of the emulsion.

Besides vegetable oil, water, sweetening agent, protein emulsifier and flavouring, the nutritional drink may contain one or more other edible ingredients. Examples of such additional ingredients include: fruit juice, vitamins, minerals, dietary fibres, probiotics, antioxidants and colouring.

The nutritional drink of the present invention preferably contains a considerable amount of olive polyphenols. Accordingly, in a preferred embodiment, the emulsion contains at least 30 µg biophenols per ml. Even more preferably, the emulsion contains 50-1,000 µg biophenols per ml. Most preferably, the emulsion contains 80-500 µg biophenols per ml.

The concentration of biophenols can suitably be determined as mg gallic acid equivalent per kg, using the Folin-Clocalteau assay described by Tuberoso et al. (Phenolic Compounds, Antioxidant Activity, and Other Characteristics of Extra Virgin Olive Oils from Italian Autochthonous Varieties Tonda di Villacidro, Tonda di Cagliari, Semidana, and Bosana, Journal of Chemistry, (2016), Article ID 8462741, 7 pages, http://dx.doi.org/10.1155/2016/8462741).

The nutritional drink of the present invention preferably is a liquid having a viscosity of less than 500 mPa.s at 15 s⁻¹ and 20°C. Even more preferably, the viscosity is in the range of 5-300 mPa.s at 15 s⁻¹ and 20°C.

In order to ensure that the nutritional drink does not suffer from phase separation during storage, it is advantageous to thoroughly homogenise the emulsion so as to produce a finely dispersed oil phase. Preferably, the dispersed oil phase of the emulsion has a volume weighted average diameter of 0.5-20 µm. The volume weighted average diameter of the dispersed oil phase can suitably be determined using laser diffraction (e.g. a Mastersizer® 2000).

Another aspect of the invention relates to a packaged nutritional drink comprising a sealed container having an internal volume of 30-150 ml, said container comprising at least 30 ml of a nutritional drink according to the present invention.

The quantity of nutritional drink in the sealed container preferably corresponds to that of drink shot. Accordingly, the container preferably has an internal volume of 30-80 ml, more preferably of 35-50 ml. The amount of nutritional drink in the container is preferably in the range of 30-80 ml, more preferably in the range of 35-50 ml.

The nutritional drink in the sealed package preferably contains 10-40 ml, more preferably 15-30 ml and most preferably 18-25 ml virgin olive oil.

According to a particularly preferred embodiment, the nutritional drink within the package preferably contains at least 5 mg biophenols equivalent. Thus, the consumption of the contents of one packaged nutrition drink suffices to achieve the recommended daily intake of polyphenols as recommended by the European Food Safety Authority (EFSA Journal 2011;9(4):2033).

The nutitional drink of the present invention preferably is a pasteurised or sterilised drink, most preferably a sterilised drink.

Yet another aspect of the invention relates to a process of manufacturing the nutritional drink of the present invention, wherein the process comprising mixing virgin olive oil, water, protein emulsifier, sweetening agent and flavouring.

The virgin olive oil that is used in the manufacturing process preferably contains at least 100 mg biophenols per kg, more preferably of at least 200 mg biophenols per kg and most preferably at least 250 mg biophenols per kg.

The present process preferably comprises the steps of:
- combining virgin olive oil, water, protein emulsifier, sweetening agent and flavouring to produce a pre-emulsion;
- homogenising the pre-emulsion; and
- pasteurizing or sterilizing the homogenised emulsion.

The first step of the present process preferably comprises combining extra virgin olive oil with the other ingredients.

The homogenized emulsion can be pasteurized or sterilized before or after the emulsion has been introduced into a container. Preferably, the emulsion is pasteurized or sterilized before it is introduced into a container. The emulsion is preferably sterilised by means of UHT sterilisation.

After the emulsion has been introduced into the container, the container is sealed.

The invention is further illustrated by means of the following non-limiting examples.

### EXAMPLES

### Example 1

A nutritional drink according to the present invention was prepared on the basis of the recipe shown in Table 1.

**Table 1**

| **Ingredients** | **Wt.%** |
|---|---|
| Virgin olive oil¹ | 50.0 |
| Tap water | 45.9 |
| Whey protein isolate² | 2.0 |
| Sucrose | 2.0 |
| Lemon juice flavouring³ | 0.1 |

| | |
|---|---|
| ¹ extra virgin olive oil from *Nera di Gonnos,* Sardinia, Italy (260 mg/kg biophenols) ² BiPRO, ex Davisco Foods International ³ Givaudan JN 036-812-0 | |

The nutritional drink was prepared as follows:
- the whey protein isolate, sucrose and flavouring were dissolved in the tap water;
- the virgin olive oil was mixed with the aqueous solution to produce a pre-emulsion having a temperature of 70°C;
- the pre-emulsion was emulsified by two-stage homogenisation (400/40 bar) in a high pressure homogeniser;
- the homogenised emulsion was UHT sterilised (140°C, 20 seconds);
- the sterilised emulsion was packaged in small sealed bottles (40 ml per bottle)

The drink so prepared had a pH of 6.8. The dispersed oil phase had a volume weighted diameter (determined by Mastersizer® 2000) of approximately 1.8 µm. The drink had a creamy, smooth texture resembling the thickness of single cream. The aroma and taste of the drink was evaluated by a panel. The panel found that the drink had a pleasant, fresh, lemon peel taste.

The 40 ml of nutritional drink contained approximately 5.2 mg biophenols.

### Terna

The drink did not show any signs of physical instability when it was stored for 4 weeks at 4°C.

### Example 2

Example 1 was repeated, except that the whey protein isolate was replaced by sucrose oligo ester (F20W, ex Sisterna). The volume weighted average diameter of the emulsion was approximately 12 µm.

The drink so obtained was found to be of similar quality as the drink described in Example 1, except that it had a substantially thicker texture, similar to that of thick cream. Furthermore, the drink was slightly less stable than the drink of Example 1.

### Example 3

Example 1 was repeated, except that this time pea protein (Nutralys® S85F, ex Roquette) was used instead of whey protein isolate. The pea protein was applied in a concentration of 4 wt.% and the water content of the emulsion was reduced accordingly. The volume weighted average diameter of the emulsion was approximately 30 µm.

The drink so obtained was found to be of similar quality as the drink described in Example 1, except that it had a substantially thicker texture, similar to that of thick cream. Furthermore, the drink was slightly less stable than the drink of Example 1.

### Example 4

Example 1 was repeated except that the sucrose was replaced by 3 wt.% agave syrup (76% sugars) and that the water content was reduced accordingly.

The drink so obtained was found to be of similar quality as the drink of Example 1.

### Example 5

Example 1 was repeated except that the sucrose was replaced by an equal amount of palm sugar (89% sugars), the flavouring was replaced by 0.1 wt.% of a coffee flavour (ex Givaudan, FW 516-122-2) and the water content was increased accordingly.

The drink so obtained was similar to the drink of Example 1, except for the taste. The drink was found to have a creamy coffee taste.

### Example 6

Example 1 was repeated, except that this time the flavouring was replaced by 0.1 wt.% of different flavourings, and the water content was increased accordingly. The flavourings tested and the results of the panel evaluation are shown in Table 2.

**Table 2**

| **Flavouring** | **Panel evaluation** |
|---|---|
| Pineapple, ex Givaudan, SC 343-078-3 | Sharp, fresh, nice pineapple taste |
| Strawberry, ex Givaudan, NR-007-967-7 | Green strawberry |
| Vanilla, ex Givaudan, 57036E | Creamy, vanilla |
| Banana, ex Givaudan, RA-012-4-28-3 | Creamy, slightly banana |

### Comparative Example A

Example 1 was repeated, except that the sucrose was removed and the water content was increased accordingly.

It was found that the drink so obtained had a bitter taste and that the aroma contained clearly perceptible green, grassy notes.

## Claims

1. A nutritional drink in the form of a liquid oil-in-water emulsion that comprises vegetable oil, said emulsion comprising:
• 25-70 wt.% virgin olive oil;
• 25-70 wt.% of water;
• 1-15% by weight of water of a sweetening agent selected from saccharide sweeteners, polyol sweeteners and combinations thereof;
• 0.5-8 wt.% of an emulsifying agent selected from protein emulsifiers, phospholipids and combinations thereof; and
• flavouring.

2. Nutritional drink according to claim 1, wherein at least 50 wt.% of the vegetable oil contained in the emulsion is virgin olive oil.

3. Nutritional drink according to claim 1 or 2, wherein the virgin olive oil comprises at least 50 wt.% extra virgin olive oil.

4. Nutritional drink according to any one of the preceding claims, wherein the continuous aqueous phase contains at least 1 wt.% of saccharide sweetener selected from sucrose, glucose, fructose and combinations thereof.

5. Nutritional drink according to any one of the preceding claims, wherein the emulsion contains at least 2 wt.% protein emulsifier.

6. Nutritional drink according to any one of the preceding claims, wherein the protein emulsifier is selected from whey protein, soy protein, egg protein and combinations thereof.

7. Nutritional drink according to any one of the preceding claims, wherein the flavour provided by the flavouring is selected from fruit flavour, vanilla flavour, chocolate flavour, honey flavour, herb flavour, spice flavour and combinations thereof.

8. Nutritional drink according to any one of the preceding claims, wherein the emulsion contains 35-50 wt.% vegetable oil and 35-60 wt.% water.

9. Nutritional drink according to any one of the preceding claims, wherein the combination of vegetable oil and water constitutes at least 80 wt.% of the emulsion.

10. Nutritional drink according to any one of the preceding claims, wherein the emulsion contains at least 30 µg hydroxytyrosol equivalent per ml.

11. Nutritional drink according to any one of the preceding claims, wherein the drink has a viscosity of less than 500 mPa.s at 15 s⁻¹ and 20°C.

12. Nutritional drink according to any one of the preceding claims, wherein the dispersed oil phase of the emulsion has a volume weighted average diameter of 0.5-20 µm.

13. A packaged nutritional drink comprising a sealed container having an internal volume of 30-150 ml, said container comprising at least 30 ml of a nutritional drink according to any one of the preceding claims.

14. Packaged nutritional drink according to claim 13 wherein the nutritional drink within the package contains at least 5 mg hydroxytyrosol equivalent.

15. A process of manufacturing a nutritional drink according to any one of claims 1-12,
wherein the process comprising mixing virgin olive oil, water, protein emulsifier, sweetening agent and flavouring.

## Patentansprüche

1. Nährgetränk in Form einer flüssigen Öl-in-Wasser-Emulsion, die Pflanzenöl umfasst, wobei die Emulsion umfasst:
• 25 - 70 Gew.-% natives Olivenöl;
• 25 - 70 Gew.-% Wasser;
• 1 - 15 Gew.-% eines Süßungsmittels an Wasser, ausgewählt aus Saccharid-Süßungsmitteln, Polyol-Süßungsmitteln und Kombinationen daraus;
• 0,5 - 8 Gew.-% eines Emulgators, ausgewählt aus Protein-Emulgatoren, Phospholipiden und Kombinationen daraus; sowie
• Aroma.

2. Nährgetränk nach Anspruch 1, wobei wenigstens 50 Gew.-% des in der Emulsion enthaltenen Pflanzenöls natives Olivenöl ist.

3. Nährgetränk nach Anspruch 1 oder 2, wobei das native Olivenöl wenigstens 50 Gew.-% extra natives Olivenöl umfasst.

4. Nährgetränk nach einem der vorangehenden Ansprüche, wobei die kontinuierliche wässrige Phase wenigstens 1 Gew.-% von Saccharid-Süßungsmittel enthält, das aus Saccharose, Glucose, Fructose und Kombinationen daraus ausgewählt ist.

5. Nährgetränk nach einem der vorangehenden Ansprüche, wobei die Emulsion wenigstens 2 Gew.-% Protein-Emulgator enthält.

6. Nährgetränk nach einem der vorangehenden Ansprüche, wobei der Protein-Emulgator aus Molken-Protein, Soja-Protein, Ei-Protein und Kombinationen daraus ausgewählt wird.

7. Nährgetränk nach einem der vorangehenden Ansprüche, wobei der durch das Aroma erzeugte Geschmack aus Fruchtgeschmack, Vanillegeschmack, Schokoladengeschmack, Honiggeschmack, Kräutergeschmack, Gewürzgeschmack und Kombinationen daraus ausgewählt wird.

8. Nährgetränk nach einem der vorangehenden Ansprüche, wobei die Emulsion 35 - 50 Gew.-% Pflanzenöl und 35 - 60 Gew.-% Wasser enthält.

9. Nährgetränk nach einem der vorangehenden Ansprüche, wobei die Kombination aus Pflanzenöl und Wasser wenigstens 80 Gew.-% der Emulsion bildet.

10. Nährgetränk nach einem der vorangehenden Ansprüche, wobei die Emulsion wenigstens 30 µg Hydroxytyrosol-Equivalent pro ml enthält.

11. Nährgetränk nach einem der vorangehenden Ansprüche, wobei das Getränk eine Viskosität von weniger als 500 mPa·s bei 15 s⁻¹ und 20 °C hat.

12. Nährgetränk nach einem der vorangehenden Ansprüche, wobei die dispergierte Ölphase der Emulsion einen volumengewichteten mittleren Durchmesser von 0,5 - 20 µm hat.

13. Verpacktes Nährgetränk, umfassend einen verschlossenen Behälter mit einem Innenvolumen von 30 - 150 ml, wobei der Behälter wenigstens 30 ml eines Nährgetränks nach einem der vorangehenden Ansprüche enthält.

14. Verpacktes Nährgetränk nach Anspruch 13, wobei das Nährgetränk in der Verpackung wenigstens 5 mg Hydroxytyrosol-Äquivalent enthält.

15. Verfahren zum Herstellen eines Nährgetränks nach einem der Ansprüche 1 - 12, wobei das Verfahren Mischen von nativem Olivenöl, Wasser, Protein-Emulgator, Süßungsmittel und Aroma umfasst.

## Revendications

1. Boisson nutritive sous la forme d'une émulsion liquide huile-dans-eau qui comprend de l'huile végétale, ladite émulsion comprenant :
• 25 à 70 % en poids d'huile d'olive vierge ;
• 25 à 70 % en poids d'eau,
• 1 à 15 % en poids d'eau d'un agent édulcorant choisi parmi des édulcorants saccharides, des édulcorants polyols et des combinaisons de ceux-ci ;
• 0,5 à 8 % en poids d'un agent émulsifiant choisi parmi des émulsifiants protéiniques, des phospholipides et des combinaisons de ceux-ci ; et
• un aromatisant.

2. Boisson nutritive selon la revendication 1, dans laquelle au moins 50 % en poids de l'huile végétale contenue dans l'émulsion est de l'huile d'olive vierge.

3. Boisson nutritive selon la revendication 1 ou 2, dans laquelle l'huile d'olive vierge comprend au moins 50 % en poids d'huile d'olive vierge extra.

4. Boisson nutritive selon l'une quelconque des revendications précédentes, dans laquelle la phase aqueuse continue contient au moins 1 % en poids d'édulcorant saccharide choisi parmi du saccharose, glucose, fructose et des combinaisons de ceux-ci.

5. Boisson nutritive selon l'une quelconque des revendications précédentes, dans laquelle l'émulsion contient au moins 2 % en poids d'émulsifiant protéinique.

6. Boisson nutritive selon l'une quelconque des revendications précédentes, dans laquelle l'émulsifiant protéinique est choisi parmi une protéine de lactosérum, protéine de soja, protéine d'œuf et des combinaisons de celles-ci.

7. Boisson nutritive selon l'une quelconque des revendications précédentes, dans laquelle l'arôme fourni par l'aromatisant est choisi parmi un arôme de fruit, arôme de vanille, arôme de chocolat, arôme de miel, arôme d'herbe, arôme d'épice et des combinaisons de ceux-ci.

8. Boisson nutritive selon l'une quelconque des revendications précédentes, dans laquelle l'émulsion contient de 35 à 50 % en poids d'huile végétale et de 35 à 60 % en poids d'eau.

9. Boisson nutritive selon l'une quelconque des revendications précédentes, dans laquelle la combinaison d'huile végétale et d'eau constitue au moins 80 % en poids de l'émulsion.

10. Boisson nutritive selon l'une quelconque des revendications précédentes, dans laquelle l'émulsion contient au moins 30 µg d'équivalent hydroxytyrosol par ml.

11. Boisson nutritive selon l'une quelconque des revendications précédentes, dans laquelle la boisson a une viscosité inférieure à 500 mPa.s à 15 s⁻¹ et 20°C.

12. Boisson nutritive selon l'une quelconque des revendications précédentes, dans laquelle la phase huileuse dispersée de l'émulsion a un diamètre moyen pondéré en volume de 0,5 à 20 µm.

13. Boisson nutritive emballée comprenant un récipient étanche ayant un volume interne de 30 à 150 ml, ledit récipient comprenant au moins 30 ml d'une boisson nutritive selon l'une quelconque des revendications précédentes.

14. Boisson nutritive emballée selon la revendication 13, dans laquelle la boisson nutritive à l'intérieur de l'emballage contient au moins 5 mg d'équivalent hydroxytyrosol.

15. Procédé de fabrication d'une boisson nutritive selon l'une quelconque des revendications 1 à 12, dans lequel le procédé comprend le mélange d'huile d'olive vierge, d'eau, d'émulsifiant protéinique, d'agent édulcorant et d'aromatisant.
